# EUROPEAN PATENT SPECIFICATION

(11) **EP 3 188 019 B1**
(45) Date of publication and mention of the grant of the patent: **18.09.2019**
(21) Application number: 15307176.6
(22) Date of filing: 30.12.2015
(51) Int. Cl.: G06F 11/14

(54) **METHOD FOR SELECTING A CONTENT COMPRISING AUDIOVISUAL DATA AND CORRESPONDING ELECTRONIC DEVICE, SYSTEM, COMPUTER READABLE PROGRAM PRODUCT AND COMPUTER READABLE STORAGE MEDIUM**
VERFAHREN ZUR AUSWAHL EINES INHALTS MIT AUDIOVISUELLEN DATEN UND ENTSPRECHENDE ELEKTRONISCHE VORRICHTUNG, SYSTEM, COMPUTERLESBARES PROGRAMMPRODUKT UND COMPUTERLESBARES SPEICHERMEDIUM
PROCÉDÉ POUR SÉLECTIONNER UN CONTENU COMPRENANT DES DONNÉES AUDIOVISUELLES ET DISPOSITIF ÉLECTRONIQUE CORRESPONDANT, SYSTÈME, PRODUIT DE PROGRAMME LISIBLE PAR ORDINATEUR ET SUPPORT DE STOCKAGE LISIBLE PAR ORDINATEUR

(43) Date of publication of application: 05.07.2017
(73) Proprietor: InterDigital CE Patent Holdings, 75017 Paris (FR)
(72) Inventor: LEFEBVRE, Frederic, 35576 CESSON SEVIGNE (FR); JAIN, Himalaya, 35576 CESSON SEVIGNE (FR); PEREZ, Patrick, 35576 CESSON SEVIGNE (FR)
(74) Representative: Tarquis-Guillou, Anne

(56) References cited:
- US-A1- 2009 112 878
- US-A1- 2011 135 284
- US-A1- 2013 325 809
- US-A1- 2014 101 109

## Description

### 1. Technical field

The present disclosure relates to the field of automatic selection of contents thanks to an electronic device, and notably to the field of automatic copy operations related to audiovisual content.

A method for selecting a content comprising audiovisual data and corresponding electronic device, system, computer readable program product and computer readable storage medium are described.

### 2. Background art

Electronic devices comprising audio and/or video capabilities are widely used today. Those electronic devices permit a user to acquire new audiovisual contents (for instance pictures, video, music), thanks either to their input/output interfaces and/or to their communication interfaces. However, those audiovisual contents stored in the electronic device are often numerous and very greedy in terms of memory. Furthermore, they can be lost in case of a failure, a loss or a stealing of the electronic device. Such a loss can be felt as very prejudicial by a user. These contents can also require large communication resource and bandwidth when the user of the electronic device decides to acquire them from a remote electronic device or to share them with a remote electronic device (like a remote backup server or an electronic device of another user).

Such, it is at the same time very important for a user to backup or share his audiovisual content and also to limit the backup or sharing operation (in terms of size or time notably).

Some solutions of the prior art have proposed to perform selective backup operation by using exclusion or inclusion rules related to particular type of contents or to location of contents in order to optimize the backup operation.

However, the known solutions do not fully meet user's expectations.

Document US 2009/0112878 A1 discloses systems, methods and computer program products that facilitate intelligent, automatic selection of content on consumer electronic devices to be backed up. User-defined rules selectively and automatically backup data to a network, to another external device or even to an internal chip or memory. Via a user-friendly interface, users can initially set up the criteria, e.g., files to be backed up and location for storage of backed up data, and so on, for data backup, and thereafter, data backup can occur automatically.

### 3. Summary

The present principles overcome at least one of the above mentioned disadvantages by proposing a method, adapted to be implemented by a software application executing on an electronic device, said software application being adapted for selecting at least one first audiovisual content, during a backup operation, amongst a plurality of audiovisual contents accessible by said electronic device, said method being characterized in that it comprises - obtaining audiovisual descriptors of said audiovisual contents, said audio visual descriptors being computed by applying a spatio-temporal and/or time-frequency mathematical transform to audiovisual data extracted from said audiovisual contents; - selecting said first audiovisual content according to at least one backup rule taking into account at least one of said obtained audiovisual descriptors of said audiovisual contents.

Terms "performing a Backup operation", or "backing up a content", are to be understood in the present disclosure as a processing including duplicating, or copying, at least partially, the content (for saving or sharing notably) and/or eventually some associated items (like associated metadata or descriptors). The backup can be performed locally, (the content and its duplicated content being both located on the same device, for instance the electronic device), by at least one upload operation (to at least one destination device, being the electronic device or at least onedifferent device) and/or by at least one download operation from at least one source device, being the electronic device or at least one different device. According to embodiments, a same content can be duplicated on several destination device or on a unique destination device or the duplication can be split amongst different devices.

According to at least one embodiment, said at least one backup rule comprises at least one criterion belonging to a first group comprising: - a quality of at least one of said audiovisual contents; - a presence of at least one face in at least one of said audiovisual contents; - a presence of at least one known face in at least one of said audiovisual contents; - a presence of at least one known place in at least one of said audiovisual contents; - a similarity between at least two of said audiovisual contents; - a privacy of at least one of said audiovisual contents.

According to at least one embodiment, said at least one backup rule comprises at least one criterion belonging to a second group comprising: - a size limit of said audiovisual contents; - a backup state of at least one of said audiovisual contents; - a format or a version of at least one of said audiovisual contents; - a time stamp value of an obtaining, an acquisition, and/or a modification of at least one of said accessible contents; - a geo-localization of an acquisition of at least one of said audiovisual contents; - a date of a former backup operation, - a result of a former backup operation, - a number of audiovisual contents obtained, modified or created since the last backup operation, - a maximum number of contents to be backed up.

According to at least one embodiment, said backup rule is acquired from a user interface of said electronic device. According to at least one embodiment, said at least one audiovisual descriptor relates to at least one element belonging to a group comprising: - a distribution of intensities inside at least a part of at least one of said audiovisual contents, - a distribution of colors inside at least a part of at least one of said audiovisual contents; - a visual and/or audio pattern inside at least a part of at least one of said audiovisual contents; - a distance between at least two frames of at least one of said audiovisual contents; - a valence attribute; - an arousal attribute; - an acquisition focal length of at least one of said audiovisual contents; - an acquisition speed of at least one of said audiovisual contents; - a detected face; - a perceptual characteristic of the coded data.

According to at least one embodiment, said method comprises copying said selected first audiovisual content from at least one source device from which said selected first audiovisual content is accessible.

According to at least one embodiment, said method comprises backing up said selected first audiovisual content on at least one destination device.

According to another aspect, the present disclosure relates to an electronic device comprising at least one memory and at least one processor adapted for selecting for selecting at least one first audiovisual content, during a backup operation, amongst a plurality of audiovisual contents accessible from said electronic device, said electronic device being characterized in that said at least one processor is adapted for: - obtaining audiovisual descriptors of said audiovisual contents, said audio visual descriptors being computed by applying a spatio-temporal and/or time-frequency mathematical transform to audiovisual data extracted from said audiovisual contents; - selecting said first audiovisual content content according to at least one backup rule taking into account at least one of said obtained audiovisual descriptors of said audiovisual contents.

According to at least one embodiment, said at least one processor is adapted for obtaining at least one contextual descriptor of at least one electronic device involved in said backup operation and said backup rule takes into account said contextual descriptor of said involved electronic device.

According to at least one embodiment, said involved electronic device is said electronic device itself, a source device from which at least one of said audiovisual contents is accessible to said electronic device, and/or a destination device where at least one of said audiovisual contents is to be backed up during said backup operation.

According to at least one embodiment, said electronic device is distinct from said source and/or said destination device.

According to another aspect, the present disclosure relates to a system comprising:
- at least one source device, giving access to at least one content coding audiovisual:
   - an electronic device comprising at least one memory and at least one processor configured for selecting at least one first audiovisual content, during a backup operation, amongst said audiovisual contents, said system being characterized in that said at least one processor of said electronic device is adapted for: - obtaining audiovisual descriptors of said audiovisual contents, said audio visual descriptors being computed by applying a spatio-temporal and/or time-frequency mathematical transform to - audiovisual data extracted from said audiovisual contents; - selecting said first audiovisual content amongst said audiovisual contents according to at least one backup rule taking into account at least one of said obtained audiovisual descriptors of said audiovisual contents.

According to at least one embodiment, said system comprises at least one destination device where at least one of said selected first audiovisual content is to be at least partially backup during said backup operation.

The present embodiments related to the method or to the corresponding electronic device and/or system can be employed in any combination or subcombination. For example, some embodiments of the selecting method can involve obtaining three audiovisual descriptors, describing respectively a presence of at least one known face in said accessible content, a presence of at least one known place in said accessible content and a similarity between said accessible content and another of said accessible contents, obtaining a contextual descriptor of at least the electronic (describing for instance a current location of the electronic device) and said backup rule takes into account all those descriptors.

According to another aspect, the present disclosure relates to a non-transitory program product, characterized in that it comprises program code instructions for performing, when said non-transitory software program is executed by a computer, a method, adapted to be implemented by a software application executing on an electronic device, said software application being adapted for selecting at least one first audiovisual content, during a backup operation, amongst a plurality of audiovisual contents accessible by said electronic device, said method comprising: - obtaining audiovisual descriptors of said audiovisual contents, said audio visual descriptors being computed by applying a spatio-temporal and/or time-frequency mathematical transform to audiovisual data extracted from said audiovisual contents; - selecting said first audiovisual content according to at least one backup rule taking into account at least one of said obtained audiovisual descriptors of said audiovisual contents.

According to another aspect, the present disclosure relates to a computer readable medium carrying a software program characterized in that it comprises program code instructions for performing, when said non-transitory software program is executed by a computer, a method, adapted to be implemented by a software application executing on an electronic device, said software application being adapted for selecting at least one first audiovisual content, during a backup operation, amongst a plurality of audiovisual contents accessible by said electronic device, said method comprising: - Obtaining audiovisual descriptors of said audiovisual contents, said audio visual descriptors being computed by applying a spatio-temporal and/or time-frequency mathematical transform to audiovisual data extracted from said audiovisual contents; - selecting said first audiovisual content according to at least one backup rule taking into account at least one of said obtained audiovisual descriptors of said audiovisual contents.

### 4. List of drawings.

The present disclosure will be better understood, and other specific features and advantages will emerge upon reading the following description, the description making reference to the annexed drawings wherein:
- Figure 1 illustrates a system according to a particular embodiment of the present disclosure;
- Figure 2 illustrates the selecting method of the present disclosure, in a particular embodiment;
- Figure 3 illustrates an electronic device adapted to at least one particular embodiment of the present disclosure;

It is to be noted that the drawings have only an illustration purpose and that the embodiments of the present disclosure are not limited to the illustrated embodiments.

### 5. Detailed description of the embodiments.

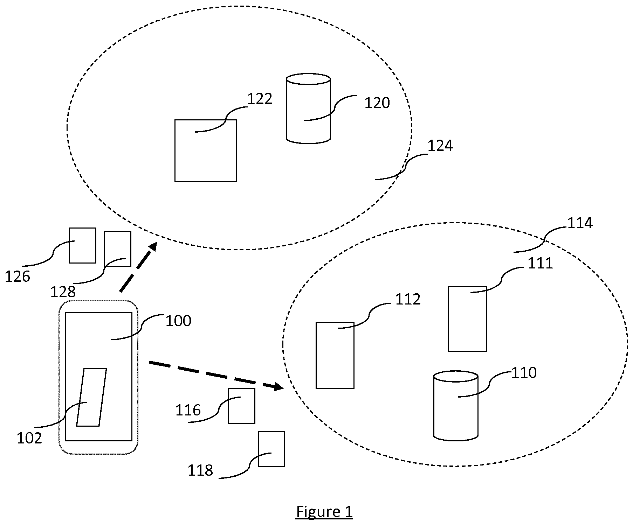

As illustrated by figure 1, at least one embodiment of the present disclosure proposes a selective backup of at least one content (like a multimedia content, a still image, or an audio and/or video content) comprising audiovisual data and accessible from an electronic device 100.

The audiovisual content can be stored in a memory of the electronic device 100, for instance a non-volatile memory like a flash memory or a Non Volatile Random Access Memory (NVRAM) database, and/or in a hard disk and/or in a removable storage unit (like a USB key) of the electronic device. The audiovisual content can also be stored on another communication device (111, 112, 114, 120, 122) accessible from a communication interface of the electronic device 100, like a local or remote server, notably a cloud server.

The electronic device 100 can be for instance a mobile terminal (notably a wireless device), like a smartphone, a tablet, a personal computer, a connected device. It can also be a wired device, like a personal computer, or a private or shared server.

According to at least some embodiments of the present disclosure, the contents to be backed up during a backup operation are selected according to at least one backup rule. This backup rule is defined by at least a criterion related notably to the specificities of the audiovisual data coded by the content (like in particular to audiovisual feature extracted from the audiovisual data).

Indeed, contrary to known backup, versioning or sharing solutions, which only consider a document as an undefined object to be synchronized or backed up, at least one embodiment of the present disclosure takes into account the nature and data contained in the document to be backed up.

According to figure 1, the method of the present disclosure can be performed by a software application 102 executing on the electronic device 100. For instance, the software application 102 can be a web based client application and/or or client application providing access to a Network Attach Server (NAS), managing the backup of contents (116, 118, 126, 128) from the electronic device 100. It can be also a client application giving access to social network services, and controlling the content (116, 118, 126, 128) to be shared on those social networks.

In the embodiment illustrated by figure 1, when connected to its private network 114, the electronic device 100 can selectively save contents on a gateway 112, a Set top box 111 or a local or home server 114 (for instance a NAS). When the electronic device 100 can benefit from an Internet connection to gain access to a wide area network (WAN) 124, it can also save contents on a cloud server 120 or share contents on a social network managed from a server 112.

The electronic device 100 can also selectively recover contents from those devices.

Some use cases can relate for instance to:
- contents stored locally on the electronic device 100 being backed up on the electronic device 100 itself (in order to have a local remedy against corruption or undesired removal of a precious content);
- contents stored on at least one source device (111, 112, 114, 120, 122) accessible from the electronic device 100 and being copied on the electronic device 100 (in order to have a local copy of contents shared by others on at least one web server for instance);
- contents stored on the electronic device 100 and being sent to at least one destination device (100, 111, 112, 114, 120, 122) (for instance in order to save and/or share a local content on at least one cloud server or to share the local content with other users of a social network);
- content stored on at least one source device (111, 112, 114, 120, 122) accessible from the electronic device and being sent to at least one destination device (111, 112, 114, 120, 122) (for instance in order to share a content saved on a cloud or NAS server with other users of a social network, or in order to save on a cloud server and/or on a NAS server content shared by other users of a social network, or in order to save on a NAS server a content already saved on a cloud server).

According to the present disclosure, the content backed up during a backup operation can be selected according to at least one backup rule comprising at least one criterion related to some audiovisual descriptors extracted from feature descriptors related to audiovisual data coded by the audiovisual content. A backup rule can further take into account a context of the electronic device, or of another device implied in the backup operation like a source or destination device.

For instance, as illustrated in figure 1, the contents 116, 118 saved when the electronic device 100 is connected to its private, trusted, network 114 can differ from the contents being saved on an online storage when the electronic device 100 is connected to the WAN 124. The contents can notably be selected upon their audiovisual descriptors, or in order to avoid or minimize the number of near duplicates in the selected contents. Some rules can be defined dynamically at the moment of the backup operation.

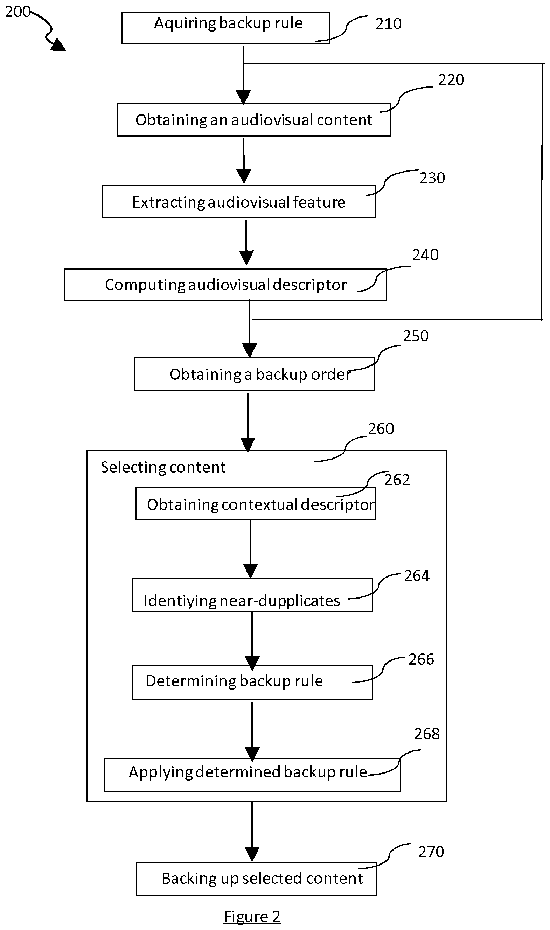

Figure 2 illustrates the selecting method 200 of the present disclosure.

In the particular embodiment of figure 2, the method comprises an acquiring 210 of at least one backup rule. This backup rule is a candidate rule that may be applied during a forthcoming backup operation.

In the illustrated embodiment, the acquiring can be performed during an initialization phase, for instance at a launching (notably the first launching) of an application that performs the selecting method of the present disclosure. In some embodiments, the acquiring can also be performed at the moment of the backup operation. For instance, according to figure 2, the acquiring can be performed after the obtaining 250 of a backup order, during the selecting 260 of contents.

This acquiring is optional. Indeed, in some embodiments, at least one rule can have been obtained previously. For instance, a backup rule can have been acquired during a former launch of the application implementing the method of the present disclosure. In other embodiments, no acquiring of a backup rule is needed. For instance, a backup rule can be contained in the software code of the application implementing the method of the present disclosure. In some embodiments, at least one backup rule can be obtained from a configuration file present in the electronic device (for instance a downloaded configuration file).

In some embodiment, a backup rule can be acquired from a user interface of the electronic device. Such an embodiment can permit to get a personalized matching rule, that can be more fitted to the needs or willingness of a user of the electronic device (or to a third person acting as a supervisor of the electronic device - like a parent when the user of the electronic device is a child).

In some embodiment, a backup rule can be acquired thanks to a communication interface of the electronic device from a remote server. The acquiring can be performed for instance at the moment of a download of a software application to be launched on the electronic device (notably an application implementing the selecting method of the present disclosure), or during a downloading of a new version of the operating system of the electronic device, or at the moment of the backup. Such embodiment can permit to acquire a default backup rule when no backup rule exists on the electronic device. It can also permit, for a plurality of electronic devices (owned by a same company for instance) to get a same backup rule (for instance in order to comply with a security policy within a company).

The backup rule can be either an exclusion rule (defined by at least one condition, or a combination of conditions, to be realized for a content to be excluded from a backup operation) or an inclusion rule (defined by at least one condition, or a combination of conditions, to be realized for a content to be included in a backup operation).

Such a condition related to a content and used for defining a backup rule can be for instance a maximum size of a content or a type of extension of a file name of the content. It can also relate to an audiovisual descriptor derived from at least one characteristic of the data coded by the content. Examples of coded data characteristics can include an estimation of a nature of the data, or of a perceived quality of the content (for a user point of view) like, for a visual content, a quality indicator related to blur and/or to a visual contrast, or to a level of noise for an audio content, or the presence in a content of a required or forbidden element (like faces and/or naked character in a visual content or voice or sound of a particular music instrument in an audio content). Detecting a naked character can notably be based on an analyzing of color histograms of visual contents and/or on a comparing with a reference annotated data set (obtained during a preliminary training phase for instance).

A backup rule can further be defined by some other conditions. Some conditions can relate to the context of the electronic device (like a minimum or maximum level of available storage, a location of the electronic device, a connection to a particular network, like a private, trusted network).

Some other conditions can relate to a particular repository or to a specific source device where stored contents are to be excluded from, or included in the backup. They can also relate to a time schedule, a backup periodicity...

The backup rule can further be defined by complementary requirements, specifying for instance a destination repository or a destination device (like a NAS server, a home server or a cloud server, like a server of a social network) where the backup contents are to be sent and/or saved.

Some conditions can also relate to a minimum bandwidth available. In embodiments where an audiovisual content can be available in several formats, or versions, some conditions can also describe a particular format or version to be selected, or a maximum number of versions of a same content to be backup. For instance, a backup rule can limit backup of a video content to its key frames when the available bandwidth is under a given threshold.

According to another embodiment, where the computing 240 of at least one audiovisual descriptor comprises computing a difference between successive frames (also called successive frames distance) of an audio or video content, a backup rule can limit a backup of an audiovisual content to parts of content where the distance between consecutive frames is higher than a given threshold, or (in case of a video content) to still image extracted from the video content when the distance between successive frames is lower than a given threshold and almost constant.

Some conditions of a backup rule can also be related to available resources (like a minimum batteries level, or a minimum availability of processing resources), of at least one of the source devices where some contents are stored, of the electronic device itself, and/or of at least one of the destination devices where some backed up contents will be stored.

Some conditions can notably permit to take into account privacy of contents. For instance, an exclusion rule can be defined by a condition about content comprising face or naked character (for content comprising visual data, like still images or a video contents).

In some embodiment, where the electronic device comprises a face recognition module, a condition can be expressed for a visual content as a result of a comparison between the visual content and a reference content. Such an embodiment can permit a systematic backup of images comprising faces of known characters, registered on the electronic device (like members of the family of the user) or a systematic exclusion of images comprising faces of known characters (for a destination server being a social network server for instance).

Similarly, visual contents comprising background scenes identified as known places (either landscape or place registered in the electronic device, or famous place identified thanks to a web server) can be either excluded or included by a backup rule.

Depending upon embodiments, one or several backup rules can be acquired.

For instance, a user of the electronic device can enter several matching rules, depending on the destination device, like a default profile, a Facebook profile, a Home (or NAS) profile, a Dropbox profile, and/or a Mobility profile.

For embodiments where several backup rules are defined, the method can comprise checking the conditions of appliance of each matching rule, in order to detect inconsistencies between several rules. Such an inconsistency can exist for instance when an inclusion rule and an exclusion rule can both apply to a particular content. This checking can for instance be performed at the moment of the acquiring of a backup rule, at the moment of the backup operation (for instance during the determining of a backup rule to be applied), or periodically.

In some embodiments, such inconsistencies can be avoided by a mandatory presence in each backup rule of a condition relating to a particular variable and a limitation to a unique backup rule for each particular value of the particular variable. For instance, in some embodiments, where a condition must relate to a value of a location descriptor of the electronic device (that can take one of the following values "Not connected to a communication network", "Connected to a WAN", "Connected to a guest network" or "Connected to my home network"), only one backup rule can be defined for each value of the location descriptor. Thus, only one backup rule will be applied when the electronic device is located in the home network of the user for instance. Of course, in such an embodiment, backup rules can be more or less restrictive depending on the required value of the location descriptor.

According to figure 2, the method comprises obtaining 220 at least one content comprising audiovisual data. The content can either be acquired by at least one input interface of the electronic device (like a camera and/or a microphone for instance) or by a communication interface. This obtaining is optional. Indeed, some audiovisual contents can already be stored in the electronic device. The obtained content can notably be stored in a specific directory (for instance an "image" or "video" directory).

According to figure 2, after the obtaining 220 of a content comprising audiovisual data, the method comprises analyzing the obtained audiovisual content and/or extracting 230 at least one audiovisual feature from the obtained audiovisual content.

The extracted features can be diverse. They can relate to particular fragments of an image or to global characteristics (such as compression type, pixel resolution, memory size ...).

The method also comprises computing 240 audiovisual descriptors from the extracted audiovisual features. In case of image or video data, the audiovisual descriptors can be for instance global descriptors such as distributions of intensities, colors or local patterns. They can also be related to a distance (or difference) between frames of a content comprising audio or video data (like a geometric, photometric and/or colorimetric distance between successive images). They can also describe properties relating to interestingness (like valence or arousal attributes), detected faces or perceptual characteristics of the coded data.

The audiovisual descriptors can be computed by different ways depending upon embodiments, notably by algorithms known by the one skilled in the art in the field of image processing, like a Scale-Invariant feature transform (SIFT) for image data, a Mel-Frequency Cepstral Coefficients (MFCC) transform for an audio content, spatio-temporal features for video content, and so on .

In some embodiments, the extracting 230 and/or the computing 240 of an audiovisual content can be performed on the fly, just after the obtaining 220 of the audiovisual content for instance. In other embodiments, the extracting 230 and/or the computing 240 of an audiovisual content can be performed after a user request. In still other embodiments, the extracting 230 and/or the computing 240 can be performed on batch of newly obtained contents, for instance periodically or when a certain amount of contents is to be analyzed. They can also be performed during moments where the electronic device is not in used, or by a software task with a very low priority. Such an embodiment can permit for the device to spread the use of necessary resources (in terms of time, bandwidth, and/or processing capabilities) and thus to avoid a detectable charge (or a lack of availability) of the electronic device, for a user point of view.

For instance, the extracting 230 and/or computing 240 can be performed for each audiovisual content received, created and/or modified since the last backup performed, and/or for each audiovisual content stored in a given repository.

The method can further comprise storing the extracted features and/or the computed descriptors, in association with the obtained contents.

In still other embodiments, the extracting 230 and/or computing 240 can be performed at the moment of the backup operation. Notably, in an embodiment where the extracting and/or the computing are performed after the determining of at least a backup rule to be applied for the selection of contents to be backed up, the extracting and/or the computing can be performed according to the determined backup rule to be applied.

According to figure 2, the method comprises obtaining 250 at least one backup order. Such an order can be obtained thanks to a user interface of the electronic device or to a communication interface of the electronic device (from a remote server or a device of a third person, acting as the "supervisor" of the electronic device).

The backup order can also be generated automatically by the electronic device itself. For instance, a backup order can be generated periodically, or when a certain amount of contents has been obtained. A backup order can also be generated during moments where the electronic device is not in use, or by a software task with a very low priority.

In some embodiments, the backup order can also be generated automatically according or the location of the electronic device, or the location of at least one other device implied in the backup operation.

For instance, a backup order can be generated automatically when the electronic device detects its connection to a trusted network, and/or to the home network of the user of the electronic device. Such a detection can be performed thanks to a positioning sensor, like a Global Positioning System Module (GSM), of the electronic device and/or thanks to an analyzing of some network characteristic obtained from a communication interface of the electronic device. In a variant, the backup order can be generated automatically at a given time schedule if the electronic device is still connected to the trusted network, and/or to the home network.

According to figure 2, once a backup order has been obtained, the method comprises selecting 260 the contents, notably some content comprising audiovisual data, which are to be backed up. The selection can for instance be performed on contents present in a given repository of one, two, or several source devices, or in a given repository of the electronic device (for instance in a given directory). In some embodiment, the selecting 260 can comprise extracting 230 features from the contents and/or computing 240 audiovisual descriptors. As already explained, the extracting 230 and/or the computing 240 during the selecting can be optional for at least a subset of the contents, as the extracting 230 and/or the computing 240 can have already been performed for at least some of the contents. Furthermore, in some embodiments, the descriptors can have been obtained from a source device where a corresponding content is stored or during the obtaining of a content

According to figure 2, the selecting 260 can also comprise obtaining 262 at least one contextual descriptor related to the electronic device itself, or to at least one source device or at least one destination device (like a location, an identifier of a network to which the electronic device, a source device and/or a destination device is connected, a memory available, an autonomy level, an available bandwidth,..).

According to figure 2, the selecting 260 can comprise identifying 264 at least two near duplicated contents in the audiovisual contents that are candidate for being backed up. Such an identifying can comprise comparing global descriptors of audiovisual contents and also verifying individual matching of small content fragments. Indeed, globally similar media share a large proportion of nearly identical small content fragments.

In the illustrated embodiment, the selecting 260 also comprises determining 266 at least one backup rule to be applied. For instance, the determining 266 can comprise accessing a configuration file where the rules to be applied are defined (notably previously acquired rules). In some embodiment, where several rules are defined, this determining can comprise receiving a confirmation information from a user interface and/or a communication interface of said electronic device. In other embodiment, this receiving of a confirmation information can be optional.

The selecting 260 also comprise the applying 268 of at least one determined backup rule.

It is to be noted that in some embodiments, the determining and the applying can be merged (each determined rule being applied immediately for instance, before the determining of another rule).

The obtaining 262 of contextual descriptors of devices, the computing 240 of audiovisual descriptors of contents and the identifying 264 of near duplicates have been illustrated by figure 2 as performed before the determining 266 of backup rules. However, depending upon embodiment, they can be performed before or after the determining 266. Notably, in embodiments where the obtaining 262 of contextual descriptors, the computing 240 of audiovisual descriptors and the identifying 264 of near duplicates are performed after the determining 266 of backup rules, the obtaining 262 of contextual descriptors, the computing 240 of audiovisual descriptors and the identifying 264 of near-duplicates can be performed conditionally, according to conditions associated to the determined rules. Indeed, if no determined rule contains a restrictive condition related to the privacy of contents for instance, it is not useful to compute an audiovisual descriptor related to privacy of contents.

As already explained, in some embodiments, the method can also comprise checking and resolving inconsistencies between determined/applied rules. Notably, the method can comprise generating an alert and/or requesting (not illustrated) a confirmation, on a user interface and/or a communication interface of the electronic device, in order to put in evidence and/or solve inconsistencies.

According to figure 2, the method comprises backing up 270 the selected content. Depending upon embodiments, and notably depending upon the at least one backup rule applied, the backing up can comprise sending the selected contents to at least one web server, for instance a cloud storage (notably a server implementing a web service like Facebook®, Dropbox®, Google drive®), a local or home server (like a NAS), and/or duplicating the selected content on at least one local storage unit of the electronic device (for instance a given repository or directory) and/or on at least one removable storage unit connected to the electronic device.

Depending upon embodiments, the selected content can be stored and/or sent in one or several versions, notably in a compressed version, and/or in one or several formats.

In some embodiment, the backing up can comprise testing the presence of a version of a selected content in the destination device. In such an embodiment, the actual saving and/or sharing of the content can only be performed conditionally, according to the test result and/or to at least one characteristic of the version present on the destination server. For instance, the actual saving and/or sharing can be performed only when the version present on the destination server is more recent, has a different size, different audiovisual descriptors and/or different metadata than the version present on the source device.

In some embodiment, a content can be backed up entirely. In other embodiments, a content can be backed up partially. For instance only video key frames or audio part of an audiovisual content can be backed up. In other embodiments, a content can be backed up either entirely or partially, depending upon the achievement of at least one criterion (related for instance to the content size, a time interval or a number of changes made on the content since the last backup operation involving a backup of this content, ...).

In some embodiment, the backup can comprise a backing up of at least some metadata related to the content, and/or the obtained audiovisual descriptors of the content. In other embodiment, the backup of metadata and/or audiovisual descriptor can be omitted or metadata and/or audiovisual descriptor can be backed up without the corresponding contents.

Depending upon embodiments, a content can be backup entirely in a unique server, on two or several servers, or backed up partially on different servers. At the latter case, the part being backed up on the different servers can form a partition of the content.

In an embodiment, a backing up of a content in a destination server that also implements the selecting method of the present disclosure, in a similar or different embodiment, can further imply a backing up of the saved or shared content on other destination device (being either a server or a client device) according to the method of the present disclosure. Such an embodiment can permit for instance to a set of users to selectively share audiovisual contents via a common server, each user applying its own backup rule.

In an exemplary use case, the electronic device can be a smart phone, used to take pictures on a beach during family holydays. Pictures have been taken in different formats (raw, jpeg), with different compression rates and in different exposures. Some pictures are nice and other ones are blurred. Some of them represent some family members, and include face of a child, or the user's wife wearing a bikini.

The user of the smart phone wants to share some of the pictures taken at the beach with other members of the family or with his contacts on a social network account. The bandwidth is limited.

The user can define, or have previously defined, some backup rules about its holiday pictures. Notably some backup rules can be adapted to limit the backup to selected pictures having the best quality (not blurred, right exposure), a format and/or file size adapted to the limited bandwidth available, and/or respecting some privacy constraints. Some selection criterion of the backup rule can also relate to the automatic selection of a subset of non-duplicated, or near duplicated, contents.

For instance, a first rule (named "sharing with relatives") can be defined, with the purpose of a selective sharing of contents with other members of the family (for instance via a private social network, or a private group of a public social network). , The first rule can limit the sharing to the pictures representing the family members and being of good quality. The criteria of the first rule can for instance:
- require contents coding visual data and being still images, having an audiovisual descriptor indicating the presence of a known face of at least one family member, but excluding for instance a picture of the user's wife in bath suit, and having a blur indicia being below a given threshold;
- define a destination device having an address being the ones of a known private social network, or of a known private group of a public social network.

A second backup rule (named "sharing with social contacts") can also be defined for the sharing of pictures with contacts of a given public social network. Only small size pictures can be included in order to permit a quick upload. The criteria of the second rule can for instance:
- define a maximum size of a content,
- require contents coding visual data and being still images, not comprising any character, and having a blur indicia being below a given threshold,
- define a destination device having an address being the given public social network.

A third and fourth backup rule can be defined for a backup on a private space of a cloud storage.

The criteria of the third rule (named "backing up my picture in mobility") can be for instance
- require contents coding visual data and being still images, having a blur indicia being below a given threshold,
- define a preferred format being a "jpeg" format,
- require no near-duplicates in the contents to be selected,
- define a destination device being the cloud server,
- require a location of the electronic device being different from the known GPS location of the family home.

The criteria of the fourth rule (named "backing up my picture at home") can be for instance:
- require contents coding visual data and being still images, having a blur indicia being below a given threshold;
- define a preferred format being a "raw" format;
- define a destination device being a NAS located at the user's home,
- require a location of the electronic device corresponding to the known GPS location of the family home.

If a backup order is obtained from the user interface of the smart phone, when the family is on the beach, determining a backup rule can comprise requesting a confirmation of the user about the applicability of either the first, second, third and/or fourth rule and the applying of the determined rule for selecting contents to be backed up. The content selected will differ upon the applied rule. Of course if the user selects the fourth rule, no content will be selected and a n alart can be generated on the user interface of the electronic device. If a backup order is generated automatically when the smartphone detects that its GPS location is the one of the family home, the determined and applied rule can be the fourth rule. In a variant, one of the backup rule can further comprise a condition relating to an indicator limiting the backing up to the audiovisual descriptors of contents. Such an embodiment can be well adapted for indexing or searching of contents, on a destination device, similar to given audiovisual contents of a source device.

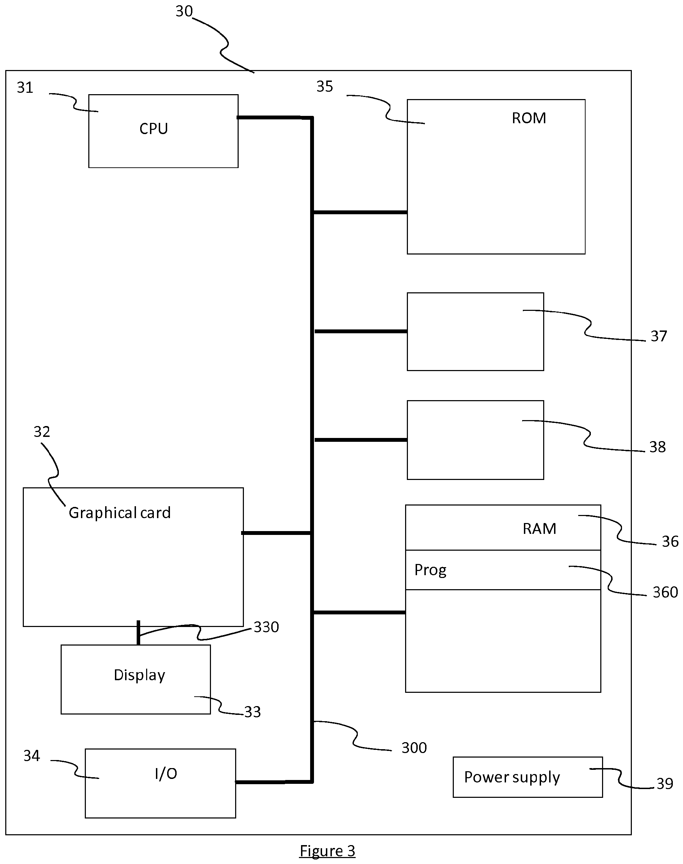

**Figure 3** describes the structure of an electronic device 30 adapted notably to perform the selection method of the present disclosure. The electronic device can be an audio and/or video acquiring device, like a smart phone or a camera. It can also be a device without any audio and/or video acquiring capabilities but with audio and/or video processing capabilities. In some embodiment, the electronic device can comprise a communication interface, like a receiving interface to receive an input audio and/or video contents to be processed according to the selecting method of the present disclosure, or a transmitting interface for transmitting an audio and/or video signal corresponding to at least a part of a content selected with the selecting method of the present disclosure. This communication interface is optional. Indeed, in some embodiments, the electronic device acquires audio and/or video contents and locally copies those audio and/or video contents; in a same or different format or version.

In the particular embodiment of figure 3, the electronic device 30 can include different devices, linked together via a data and address bus 300, which can also carry a timer signal. For instance, it can include a micro-processor 31 (or CPU), a graphics card 32 (depending on embodiments, such a card may be optional), at least one Input/ Output module 34, (like a keyboard, a mouse, a led, and so on), a ROM (or « Read Only Memory ») 35, a RAM (or « Random Access Memory ») 36, a power supply 39. In the particular embodiment of figure 3, the electronic device can also comprise at least one communication interface 37configured for the reception and/or transmission of data, notably audio and/or video, via a wireless connection (notably of type WIFI® or Bluetooth®), or a wired communication interface. In the illustrated embodiment, the electronic device 30 can communicate with a server thanks to the communication interface 37. This communication interface is optional.

In some embodiments, the electronic device 30 can also include, or be connected to, a display module 33, for instance a screen, directly connected to the graphics card 32 by a dedicated bus 330.

In the illustrated embodiment, the electronic device 30 also comprises a GPS sensor, adapted to determine the geographic location of the electronic device.

Each of the mentioned memories can include at least one register, that is to say a memory zone of low capacity (a few binary data) or high capacity (with a capability of storage of an entire audio and/or video file notably).

When the electronic device 30 is powered on, the microprocessor 31 loads the program instructions 360 in a register of the RAM 36, notably the program instruction needed for performing at least one embodiment of the selecting method described herein, and executes the program instructions.

According to a variant, the electronic device 30 includes several microprocessors. According to another variant, the power supply 39 is external to the electronic device 30.

In the particular embodiment illustrated in figure 3, the microprocessor 31 can be configured for selecting at least one content, during a backup operation, amongst a plurality of contents coding audiovisual data and being accessible from said electronic device.

According to at least one embodiment, the at least one processor isadapted for:
- obtaining, for each accessible content, at least one audiovisual descriptor derived from the audiovisual data;
- selecting said accessible content according to at least one backup rule taking into account said obtained audiovisual descriptor of said accessible contents.

As will be appreciated by one skilled in the art, aspects of the present principles can be embodied as a system, method, or computer readable medium. Accordingly, aspects of the present disclosure can take the form of an hardware embodiment, a software embodiment (including firmware, resident software, microcode, and so forth), or an embodiment combining software and hardware aspects that can all generally be referred to herein as a "circuit", module" or "system". Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage mediums to which the present principles can be applied, is merely an illustrative and not exhaustive listing as is readily appreciated by one of ordinary skilled in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

Thus, for example, it will be appreciated by those skilled in the art that the block diagrams presented herein represent conceptual views of illustrative system components and/or circuitry of some embodiments of the present principles. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

## Claims

1. Electronic device comprising at least one memory and at least one processor adapted for selecting at least one first audiovisual content, during a backup operation, amongst a plurality of audiovisual contents accessible from said electronic device, said electronic device being **characterized in that** said at least one processor is adapted for:
- obtaining audiovisual descriptors of said audiovisual contents, said audio visual descriptors being computed by applying a spatio-temporal and/or time-frequency mathematical transform to audiovisual data extracted from said audiovisual contents;
- selecting said first audiovisual content content according to at least one backup rule taking into account at least one of said obtained audiovisual descriptors of said audiovisual contents.

2. Method, adapted to be implemented by a software application executing on an electronic device, said software application being adapted for selecting at least one first audiovisual content, during a backup operation, amongst a plurality of audiovisual contents accessible by said electronic device, said method being **characterized in that** it comprises:
- obtaining audiovisual descriptors of said audiovisual contents, said audio visual descriptors being computed by applying a spatio-temporal and/or time-frequency mathematical transform to audiovisual data extracted from said audiovisual contents;
- selecting said first audiovisual content according to at least one backup rule taking into account at least one of said obtained audiovisual descriptors of said audiovisual contents.

3. Electronic device according to claim 1 or method according to claim 2, wherein said at least one backup rule comprises at least one criterion belonging to a first group comprising:
- a quality of at least one of said audiovisual contents;
- a presence of at least one face in at least one of said audiovisual contents;
- a presence of at least one known face in at least one of said audiovisual contents;
- a presence of at least one known place in at least one of said audiovisual contents;
- a similarity between at least two of said audiovisual contents;
- a privacy of at least one of said audiovisual contents.

4. Electronic device according to claim 1 or 3 or method according to claim 2 or 3 wherein said at least one backup rule comprises at least one criterion belonging to a second group comprising:
- a size limit of said audiovisual contents;
- a backup state of at least one of said audiovisual contents;
- a format or a version of at least one of said audiovisual contents;
- a time stamp value of an obtaining, an acquisition, and/or a modification of at least one of said audiovisual contents;
- a geo-localization of an acquisition of at least one of said audiovisual contents;
- a date of a former backup operation,
- a result of a former backup operation,
- a number of audiovisual contents obtained, modified or created since the last backup operation,
- a maximum number of audiovisual contents to be backed up.

5. Electronic device according to claim 1, 3 or 4 or method according to any of claims 2 to 4, wherein said backup rule is acquired from a user interface of said electronic device.

6. Electronic device according to any of claims 1 or 2 to 5 method according to any of claims 2 to 5, wherein said at least one audiovisual descriptor relates to at least one element belonging to a group comprising:
- a distribution of intensities inside at least a part of at least one of said audiovisual contents,
- a distribution of colors inside at least a part of at least one of said audiovisual contents;
- a visual and/or audio pattern inside at least a part of at least one of said audiovisual contents;
- a distance between at least two frames of at least one of said audiovisual contents;
- a valence attribute;
- an arousal attribute;
- an acquisition focal length of at least one of said audiovisual contents;
- an acquisition speed of at least one of said audiovisual contents;
- a detected face;
- a perceptual characteristic of the coded data.

7. Electronic device according to any of claims 1 or 3 to 6, said at least one processor being adapted for, or method according to any of claims 2 to 6, wherein said method comprising copying said selected first audiovisual content from at least one source device from which said selected first audiovisual content is accessible.

8. Electronic device according to any of claims 1 or 3 to 7, said at least one processor being adapted for, or method according to any of claims 2 to 7, said method comprising, backing up said selected first audiovisual content on at least one destination device.

9. Electronic device according to any of claims 1 or 3 to 8, wherein said at least one processor is adapted for, or method according to any of claims 2 to 8, said method comprising, obtaining at least one contextual descriptor of at least one electronic device involved in said backup operation and said backup rule takes into account said contextual descriptor of said involved electronic device.

10. Electronic device or method according to claim 9 wherein said involved electronic device is said electronic device itself, a source device from which at least one of said audiovisual contents is accessible to said electronic device, and/or a destination device where at least one of said audiovisual contents is to be backed up during said backup operation.

11. Electronic device or method according to claim 10, wherein said electronic device is distinct from said source and/or said destination device.

12. System comprising
- at least one source device, giving access to at least one content coding audiovisual data;
- an electronic device comprising at least one memory and at least one processor configured for selecting at least one first audiovisual content, during a backup operation, amongst said audiovisual contents,
said system being **characterized in that** said at least one processor of said electronic device is adapted for:
- obtaining audiovisual descriptors of said audiovisual contents, said audio visual descriptors being computed by applying a spatio-temporal and/or time-frequency mathematical transform to audiovisual data extracted from said audiovisual contents;
- selecting said first audiovisual content amongst said audiovisual contents according to at least one backup rule taking into account at least one of said obtained audiovisual descriptors of said audiovisual contents.

13. System according to claim 12 wherein said system comprises at least one destination device where at least one of said selected first audiovisual content is to be at least partially backup during said backup operation.

14. Non-transitory computer readable program product, **characterized in that** it comprises program code instructions for performing, when said non-transitory software program is executed by a computer, a method, adapted to be implemented by a software application executing on an electronic device, said software application being adapted for selecting at least one first audiovisual content, during a backup operation, amongst a plurality of audiovisual contents accessible by said electronic device, said method comprising:
- obtaining audiovisual descriptors of said audiovisual contents, said audio visual descriptors being computed by applying a spatio-temporal and/or time-frequency mathematical transform to audiovisual data extracted from said audiovisual contents;
- selecting said first audiovisual content according to at least one backup rule taking into account at least one of said obtained audiovisual descriptors of said audiovisual contents.

15. Computer readable storage medium carrying a software program **characterized in that** it comprises program code instructions for performing, when said non-transitory software program is executed by a computer, a method, adapted to be implemented by a software application executing on an electronic device, said software application being adapted for selecting at least one first audiovisual content, during a backup operation, amongst a plurality of audiovisual contents accessible by said electronic device, said method comprising:
- obtaining audiovisual descriptors of said audiovisual contents, said audio visual descriptors being computed by applying a spatio-temporal and/or time-frequency mathematical transform to audiovisual data extracted from said audiovisual contents;
- selecting said first audiovisual content according to at least one backup rule taking into account at least one of said obtained audiovisual descriptors of said audiovisual contents.

## Patentansprüche

1. Elektronische Vorrichtung, die mindestens einen Speicher und mindestens einen Prozessor umfasst, die dafür ausgelegt sind, während einer Sicherungsoperation unter mehreren audiovisuellen Inhalten, auf die von der elektronischen Vorrichtung zugegriffen werden kann, mindestens einen ersten audiovisuellen Inhalt auszuwählen, wobei die elektronische Vorrichtung **dadurch gekennzeichnet ist, dass** der mindestens eine Prozessor ausgelegt ist zum:
- Erhalten audiovisueller Deskriptoren der audiovisuellen Inhalte, wobei die audiovisuellen Deskriptoren durch Anwenden einer mathematischen Raum-Zeit- und/oder Zeit-Frequenz-Transformation auf audiovisuelle Daten, die aus den audiovisuellen Inhalten ausgekoppelt werden, berechnet werden;
- Auswählen des ersten audiovisuellen Inhalts gemäß mindestens einer Sicherungsregel unter Berücksichtigung mindestens eines der erhaltenen audiovisuellen Deskriptoren der audiovisuellen Inhalte.

2. Verfahren, das dafür ausgelegt ist, durch eine Softwareanwendung implementiert zu werden, die in einer elektronischen Vorrichtung ausgeführt wird, wobei die Softwareanwendung dafür ausgelegt ist, während einer Sicherungsoperation unter mehreren audiovisuellen Inhalten, auf die von der elektronischen Vorrichtung zugegriffen werden kann, mindestens einen ersten audiovisuellen Inhalt auszuwählen, wobei das Verfahren **dadurch gekennzeichnet ist, dass** es umfasst:
- Erhalten audiovisueller Deskriptoren der audiovisuellen Inhalte, wobei die audiovisuellen Deskriptoren durch Anwenden einer mathematischen Raum-Zeit- und/oder Zeit-Frequenz-Transformation auf audiovisuelle Daten, die aus den audiovisuellen Inhalten ausgekoppelt werden, berechnet werden;
- Auswählen des ersten audiovisuellen Inhalts gemäß mindestens einer Sicherungsregel unter Berücksichtigung mindestens eines der erhaltenen audiovisuellen Deskriptoren der audiovisuellen Inhalte.

3. Elektronische Vorrichtung nach Anspruch 1 oder Verfahren nach Anspruch 2, wobei die mindestens eine Sicherungsregel mindestens ein Kriterium umfasst, das zu einer ersten Gruppe gehört, die umfasst:
- eine Menge mindestens eines der audiovisuellen Inhalte;
- eine Anwesenheit mindestens eines Gesichts in mindestens einem der audiovisuellen Inhalte;
- eine Anwesenheit mindestens eines bekannten Gesichts in mindestens einem der audiovisuellen Inhalte;
- eine Anwesenheit mindestens eines bekannten Orts in mindestens einem der audiovisuellen Inhalte;
- eine Ähnlichkeit zwischen mindestens zwei der audiovisuellen Inhalte;
- eine Privatsphäre mindestens eines der audiovisuellen Inhalte.

4. Elektronische Vorrichtung nach Anspruch 1 oder 3 oder Verfahren nach Anspruch 2 oder 3, wobei die mindestens eine Sicherungsregel mindestens ein Kriterium umfasst, das zu einer zweiten Gruppe gehört, die umfasst:
- einen Größengrenzwert der audiovisuellen Inhalte;
- einen Sicherungszustand mindestens eines der audiovisuellen Inhalte;
- ein Format oder eine Version mindestens eines der audiovisuellen Inhalte;
- einen Zeitstempelwert eines Erhalts, eines Erwerbs und/oder einer Änderung mindestens eines der audiovisuellen Inhalte;
- eine Geoortung eines Erwerbs mindestens eines der audiovisuellen Inhalte;
- ein Datum einer früheren Sicherungsoperation,
- ein Ergebnis einer früheren Sicherungsoperation,
- eine Anzeige audiovisueller Inhalte, die seit der letzten Sicherungsoperation erhalten, geändert oder erstellt worden sind,
- eine maximale Anzahl zu sichernder audiovisueller Inhalte.

5. Elektronische Vorrichtung nach Anspruch 1, 3 oder 4 oder Verfahren nach einem der Ansprüche 2 bis 4, wobei die Sicherungsregel von einer Benutzerschnittstelle der elektronischen Vorrichtung erworben wird.

6. Elektronische Vorrichtung nach einem der Ansprüche 1 oder 2 bis 5 oder Verfahren nach einem der Ansprüche 2 bis 5, wobei sich der mindestens eine audiovisuelle Deskriptor auf mindestens ein Element bezieht, das zu einer Gruppe gehört, die umfasst:
- eine Verteilung von Intensitäten innerhalb mindestens eines Teils mindestens eines der audiovisuellen Inhalte,
- eine Verteilung von Farben innerhalb mindestens eines Teils mindestens eines der audiovisuellen Inhalte;
- ein Bild- und/oder Audiomuster innerhalb mindestens eines Teils mindestens eines der audiovisuellen Inhalte;
- eine Entfernung zwischen mindestens zwei Einzelbildern mindestens eines der audiovisuellen Inhalte;
- ein Wertigkeitsattribut;
- ein Erregungsattribut;
- eine Erwerbsbrennweite mindestens eines der audiovisuellen Inhalte;
- eine Erwerbsgeschwindigkeit mindestens eines der audiovisuellen Inhalte;
- ein ermitteltes Gesicht;
- eine Wahrnehmungscharakteristik der codierten Daten.

7. Elektronische Vorrichtung nach einem der Ansprüche 1 oder 3 bis 6, wobei der mindestens eine Prozessor ausgelegt ist zum, oder Verfahren nach einem der Ansprüche 2 bis 6, wobei das Verfahren umfasst: Kopieren des ausgewählten ersten audiovisuellen Inhalts von mindestens einer Quellvorrichtung, von der aus auf den ausgewählten ersten audiovisuellen Inhalt zugegriffen werden kann.

8. Elektronische Vorrichtung nach einem der Ansprüche 1 oder 3 bis 7, wobei der mindestens eine Prozessor ausgelegt ist zum, oder Verfahren nach einem der Ansprüche 2 bis 7, wobei das Verfahren umfasst: Sichern des ausgewählten ersten audiovisuellen Inhalts in mindestens einer Zielvorrichtung.

9. Elektronische Vorrichtung nach einem der Ansprüche 1 oder 3 bis 8, wobei der mindestens eine Prozessor ausgelegt ist zum, oder Verfahren nach einem der Ansprüche 2 bis 8, wobei das Verfahren umfasst: Erhalten mindestens eines Kontextdeskriptors mindestens einer elektronischen Vorrichtung, die an der Sicherungsoperation beteiligt ist, und wobei die Sicherungsregel den Kontextdeskriptor der beteiligten elektronischen Vorrichtung berücksichtigt.

10. Elektronische Vorrichtung oder Verfahren nach Anspruch 9, wobei die beteiligte elektronische Vorrichtung die elektronische Vorrichtung selbst, eine Quellvorrichtung, von der aus die elektronische Vorrichtung auf mindestens einen der audiovisuellen Inhalte zugreifen kann, und/oder eine Zielvorrichtung, in der mindestens einer der audiovisuellen Inhalte während der Sicherungsoperation gesichert werden soll, ist.

11. Elektronische Vorrichtung oder Verfahren nach Anspruch 10, wobei die elektronische Vorrichtung von der Quell- und/oder von der Zielvorrichtung verschieden ist.

12. System, das umfasst:
- mindestens eine Quellvorrichtung, die Zugriff auf mindestens einen Inhalt, der audiovisuelle Daten codiert, bietet;
- eine elektronische Vorrichtung, die mindestens einen Speicher und mindestens einen Prozessor, die dafür konfiguriert sind, während einer Sicherungsoperation unter den audiovisuellen Inhalten mindestens einen ersten audiovisuellen Inhalt auszuwählen, umfasst, wobei das System **dadurch gekennzeichnet ist, dass** der mindestens eine Prozessor der elektronischen Vorrichtung ausgelegt ist zum:
- Erhalten audiovisueller Deskriptoren der audiovisuellen Inhalte, wobei die audiovisuellen Deskriptoren durch Anwenden einer mathematischen Raum-Zeit- und/oder Zeit-Frequenz-Transformation auf audiovisuelle Daten, die aus den audiovisuellen Inhalten ausgekoppelt werden, berechnet werden;
- Auswählen des ersten audiovisuellen Inhalts unter den audiovisuellen Inhalten gemäß mindestens einer Sicherungsregel unter Berücksichtigung mindestens eines der erhaltenen audiovisuellen Deskriptoren der audiovisuellen Inhalte.

13. System nach Anspruch 12, wobei das System mindestens eine Zielvorrichtung umfasst, wobei mindestens einer des ausgewählten ersten audiovisuellen Inhalts während der Sicherungsoperation mindestens teilweise gesichert werden soll.

14. Nichttransitorisches computerlesbares Programmprodukt, **dadurch gekennzeichnet, dass** es Programmcodeanweisungen umfasst, um, wenn das nichttransitorische Softwareprogramm durch einen Computer ausgeführt wird, ein Verfahren auszuführen, das dafür ausgelegt ist, durch eine Softwareanwendung implementiert zu werden, die in einer elektronischen Vorrichtung ausgeführt wird, wobei die Softwareanwendung dafür ausgelegt ist, während einer Sicherungsoperation unter mehreren audiovisuellen Inhalten, auf die von der elektronischen Vorrichtung zugegriffen werden kann, mindestens einen ersten audiovisuellen Inhalt auszuwählen, wobei das Verfahren umfasst:
- Erhalten audiovisueller Deskriptoren der audiovisuellen Inhalte, wobei die audiovisuellen Deskriptoren durch Anwenden einer mathematischen Raum-Zeit- und/oder Zeit-Frequenz-Transformation auf audiovisuelle Daten, die aus den audiovisuellen Inhalten ausgekoppelt werden, berechnet werden;
- Auswählen des ersten audiovisuellen Inhalts gemäß mindestens einer Sicherungsregel unter Berücksichtigung mindestens eines der erhaltenen audiovisuellen Deskriptoren der audiovisuellen Inhalte.

15. Computerlesbares Speichermedium, das ein Softwareprogramm ausführt, **dadurch gekennzeichnet, dass** es Programmcodeanweisungen umfasst, um, wenn das nichttransitorische Softwareprogramm durch einen Computer ausgeführt wird, ein Verfahren auszuführen, das dafür ausgelegt ist, durch eine Softwareanwendung implementiert zu werden, die in einer elektronischen Vorrichtung ausgeführt wird, wobei die Softwareanwendung dafür ausgelegt ist, während einer Sicherungsoperation unter mehreren audiovisuellen Inhalten, auf die von der elektronischen Vorrichtung zugegriffen werden kann, mindestens einen ersten audiovisuellen Inhalt auszuwählen, wobei das Verfahren umfasst:
- Erhalten audiovisueller Deskriptoren der audiovisuellen Inhalte, wobei die audiovisuellen Deskriptoren durch Anwenden einer mathematischen Raum-Zeit- und/oder Zeit-Frequenz-Transformation auf audiovisuelle Daten, die aus den audiovisuellen Inhalten ausgekoppelt werden, berechnet werden;
- Auswählen des ersten audiovisuellen Inhalts gemäß mindestens einer Sicherungsregel unter Berücksichtigung mindestens eines der erhaltenen audiovisuellen Deskriptoren der audiovisuellen Inhalte.

## Revendications

1. Dispositif électronique comprenant au moins une mémoire et au moins un processeur adapté pour sélectionner au moins un premier contenu audiovisuel, au cours d'une opération de sauvegarde, parmi une pluralité de contenus audiovisuels accessibles à partir dudit dispositif électronique, ledit dispositif électronique étant **caractérisé en ce que** ledit au moins un processeur est adapté pour :
- obtenir des descripteurs audiovisuels desdits contenus audiovisuels, lesdits descripteurs audiovisuels étant calculés en appliquant une transformée mathématique spatio-temporelle et/ou une transformée fréquence-temps à des données audiovisuelles extraites desdits contenus audiovisuels ;
- sélectionner ledit premier contenu audiovisuel selon au moins une règle de sauvegarde prenant en compte au moins un desdits descripteurs audiovisuels desdits contenus audiovisuels obtenus.

2. Procédé adapté pour être mis en oeuvre par une application logicielle exécutée sur un dispositif électronique, ladite application logicielle étant adaptée pour sélectionner au moins un premier contenu audiovisuel, au cours d'une opération de sauvegarde, parmi une pluralité de contenus audiovisuels accessibles par ledit dispositif électronique, ledit procédé étant **caractérisé en ce qu'**il comprend :
- obtenir des descripteurs audiovisuels desdits contenus audiovisuels, lesdits descripteurs audiovisuels étant calculés en appliquant une transformée mathématique spatio-temporelle et/ou une transformée fréquence-temps à des données audiovisuelles extraites desdits contenus audiovisuels ;
- sélectionner ledit premier contenu audiovisuel selon au moins une règle de sauvegarde prenant en compte au moins un desdits descripteurs audiovisuels desdits contenus audiovisuels obtenus.

3. Dispositif électronique selon la revendication 1 ou procédé selon la revendication 2, dans lequel ladite au moins une règle de sauvegarde comprend au moins un critère appartenant à un premier groupe comprenant :
- une qualité d'au moins un desdits contenus audiovisuels ;
- une présence d'au moins une face dans au moins un desdits contenus audiovisuels ;
- une présence d'au moins une face connue dans au moins un desdits contenus audiovisuels ;
- une présence d'au moins une place connue dans au moins un desdits contenus audiovisuels ;
- une similarité entre au moins deux desdits contenus audiovisuels ;
- une confidentialité d'au moins un desdits contenus audiovisuels.

4. Dispositif électronique selon la revendication 1 ou 3 ou procédé selon la revendication 2 ou 3, dans lequel ladite au moins une règle de sauvegarde comprend au moins un critère appartenant à un deuxième groupe comprenant :
- une limite de taille desdits contenus audiovisuels ;
- un état de sauvegarde d'au moins un desdits contenus audiovisuels ;
- un format ou une version d'au moins un desdits contenus audiovisuels ;
- une valeur d'horodatage d'une obtention, d'une acquisition et/ou d'une modification d'au moins un desdits contenus audiovisuels ;
- une géolocalisation d'une acquisition d'au moins un desdits contenus audiovisuels ;
- une date d'une précédente opération de sauvegarde ;
- un résultat d'une précédente opération de sauvegarde ;
- un nombre de contenus audiovisuels obtenus, modifiés ou créés depuis la dernière opération de sauvegarde ;
- un nombre maximum de contenus audiovisuels à sauvegarder.

5. Dispositif électronique selon la revendication 1, 3 ou 4 ou procédé selon l'une quelconque des revendications 2 à 4, dans lequel ladite règle de sauvegarde est acquise depuis une interface utilisateur dudit dispositif électronique.

6. Dispositif électronique selon l'une quelconque des revendications 1 ou 2 à 5 ou procédé selon l'une quelconque des revendications 2 à 5, dans lequel ledit au moins un descripteur audiovisuel fait référence à au moins un élément appartenant à un groupe comprenant :
- une distribution d'intensités à l'intérieur d'au moins une partie d'au moins un desdits contenus audiovisuels ;
- une distribution de couleurs à l'intérieur d'au moins une partie d'au moins un desdits contenus audiovisuels ;
- un motif visuel et/ou audio à l'intérieur d'au moins une partie d'au moins un desdits contenus audiovisuels ;
- une distance entre au moins deux trames d'au moins un desdits contenus audiovisuels ;
- un attribut de valence ;
- un attribut d'excitation ;
- une longueur focale d'acquisition d'au moins un desdits contenus audiovisuels ;
- une vitesse d'acquisition d'au moins un desdits contenus audiovisuels ;
- une face détectée ;
- une caractéristique perpétuelle des données codées.

7. Dispositif électronique selon l'une quelconque des revendications 1 ou 3 à 6, ledit au moins processeur étant adapté pour, ou procédé selon l'une quelconque des revendications 2 à 6, dans lequel ledit procédé comprenant copier ledit premier contenu audiovisuel sélectionné dans au moins un dispositif source à partir duquel ledit premier contenu audiovisuel est accessible.

8. Dispositif électronique selon l'une quelconque des revendications 1 ou 3 à 7, ledit au moins un processeur étant adapté pour, ou procédé selon l'une quelconque des revendications 2 à 7, ledit procédé comprenant sauvegarder ledit premier contenu audiovisuel sélectionné sur au moins un dispositif de destination.

9. Dispositif électronique selon l'une quelconque des revendications 1 ou 3 à 8, pour lequel ledit au moins un processeur est adapté pour, ou procédé selon l'une quelconque des revendications 2 à 8, ledit procédé comprenant obtenir au moins un descripteur contextuel d'au moins un dispositif électronique impliqué dans ladite opération de sauvegarde et ladite règle de sauvegarde prend en compte ledit descripteur contextuel dudit dispositif électronique impliqué.

10. Dispositif électronique ou procédé selon la revendication 9, dans lequel ledit dispositif électronique impliqué est ledit dispositif électronique lui-même, un dispositif source à partir duquel au moins un desdits contenus audiovisuels est accessible audit dispositif électronique, et/ou un dispositif de destination où au moins un desdits contenus audiovisuels doit être sauvegardé au cours de ladite opération de sauvegarde.

11. Dispositif électronique ou procédé selon la revendication 10, dans lequel ledit dispositif électronique est distinct dudit dispositif source et/ou dudit dispositif de destination.

12. Système comprenant :
- au moins un dispositif source, donnant accès à au moins un contenu codant des données audiovisuelles ;
- un dispositif électronique comprenant au moins une mémoire et au moins un processeur configuré pour sélectionner au moins un premier contenu audiovisuel, au cours d'une opération de sauvegarde, parmi lesdits contenus audiovisuels,
ledit système étant **caractérisé en ce que** ledit au moins un processeur dudit dispositif électronique est adapté pour :
- obtenir des descripteurs audiovisuels desdits contenus audiovisuels, lesdits descripteurs audiovisuels étant calculés en appliquant une transformée mathématique spatio-temporelle et/ou une transformée fréquence-temps à des données audiovisuelles extraites desdits contenus audiovisuels ;
- sélectionner ledit premier contenu audiovisuel parmi lesdits contenus audiovisuels selon au moins une règle de sauvegarde prenant en compte au moins un desdits descripteurs audiovisuels desdits contenus audiovisuels obtenus.

13. Système selon la revendication 12, dans lequel ledit système comprend au moins un dispositif de destination où au moins un dudit premier contenu audiovisuel sélectionné doit être au moins partiellement sauvegardé au cours de ladite opération de sauvegarde.

14. Programme non transitoire lisible sur ordinateur, **caractérisé en ce qu'**il comprend des instructions de code de programme pour mettre en oeuvre, lorsque ledit programme logiciel non transitoire est exécuté par un ordinateur, un procédé adapté pour être mis en oeuvre par une application logicielle exécutée sur un dispositif électronique, ladite application logicielle étant adaptée pour sélectionner au moins un premier contenu audiovisuel, au cours d'une opération de sauvegarde, parmi une pluralité de contenus audiovisuels accessibles par ledit dispositif électronique, ledit procédé comprenant :
- obtentir des descripteurs audiovisuels desdits contenus audiovisuels, lesdits descripteurs audiovisuels étant calculés en appliquant une transformée mathématique spatio-temporelle et/ou une transformée fréquence-temps à des données audiovisuelles extraites desdits contenus audiovisuels ;
- sélectionner ledit premier contenu audiovisuel selon au moins une règle de sauvegarde prenant en compte au moins un desdits descripteurs audiovisuels desdits contenus audiovisuels obtenus.

15. Support de stockage lisible sur ordinateur contenant un programme logiciel, **caractérisé en ce qu'**il comprend des instructions de code de programme pour mettre en oeuvre, lorsque ledit programme logiciel non transitoire est exécuté par un ordinateur, un procédé adapté pour être mis en oeuvre par une application logicielle exécutée sur un dispositif électronique, ladite application logicielle étant adaptée pour sélectionner au moins un premier contenu audiovisuel, au cours d'une opération de sauvegarde, parmi une pluralité de contenus audiovisuels accessibles par ledit dispositif électronique, ledit procédé comprenant :
- obtenir des descripteurs audiovisuels desdits contenus audiovisuels, lesdits descripteurs audiovisuels étant calculés en appliquant une transformée mathématique spatio-temporelle et/ou une transformée fréquence-temps aux données audiovisuelles extraites desdits contenus audiovisuels;
- sélectionner ledit premier contenu audiovisuel selon au moins une règle de sauvegarde prenant en compte au moins un desdits descripteurs audiovisuels desdits contenus audiovisuels obtenus.
